Europäisches Patentamt

(19) European Patent Office

Office européen des brevets

(11) Veröffentlichungsnummer: **0 230 503**
**B1**

(12) **EUROPÄISCHE PATENTSCHRIFT**

(45) Veröffentlichungstag der Patentschrift:
14.03.90

(51) Int. Cl.⁴: **F16J 15/32**

(21) Anmeldenummer: **86105636.4**

(22) Anmeldetag: **23.04.86**

(54) Wellendichtung.

(30) Priorität: **21.12.85 DE 3545683**

(43) Veröffentlichungstag der Anmeldung:
**05.08.87 Patentblatt 87/32**

(45) Bekanntmachung des Hinweises auf die Patenterteilung:
**14.03.90 Patentblatt 90/11**

(84) Benannte Vertragsstaaten:
**AT BE CH DE FR GB IT LI NL SE**

(56) Entgegenhaltungen:
**FR-A- 1 447 749**
**US-A- 4 061 346**
**US-A- 4 317 408**

(73) Patentinhaber: **Firma Carl Freudenberg, Höhnerweg 4,
D-6940 Weinheim/Bergstrasse(DE)**

(72) Erfinder: **Ehrmann, Peter, Regerstrasse 11,
D-6944 Hemsbach(DE)**
Erfinder: **Spies, Karl-Heinz, Dr., Stettiner Strasse 14,
D-6943 Birkenau(DE)**
Erfinder: **Vogt, Rolf, Im Brückenfeld 14,
D-6836 Schwetzingen-Oftersheim(DE)**

(74) Vertreter: **Weissenfeld-Richters, Helga, Dr.,
Höhnerweg 2, D-6940 Weinheim/Bergstrasse(DE)**

ACTORUM AG

# Beschreibung

Die Erfindung betrifft eine Wellendichtung, umfassend ein Dichtelement aus polymerem Werkstoff und mit einer Dichtfläche, die die Welle mit einer elastischen Anpressung flächenhaft berührt, wobei eim Bereich der so gebildeten Berührungszone wenigstens ein die Welle konzentrisch umschließender, einstückig angeformter Ringvorsprung vorgesehen ist.

Eine Wellendichtung der vorgenannten Art ist aus der US-A 2 804 325 bekannt. Das darin zur Anwendung gelangende Dichtelement besteht aus PTFE und damit einem Werkstoff, der durch eine hornähnliche, unelastische Beschaffenheit gekennzeichnet ist. Die Oberfläche der abgedichteten Welle wird nur von dem nach innen weisenden Teil der in einer engen axialen Aufeinanderfolge auf der Dichtfläche angeordneten Ringvorsprünge berührt, welche durch tiefe Nuten einer den Ringvorsprüngen ähnlichen Größe und Profilgestaltung voneinander getrennt sind. Sie vermögen dadurch einander in ihrer Wirksamkeit zu ergänzen, was der Wellendichtung im neuen, unverbrauchten Zustand der Ringvorsprünge eine ausgezeichnete Wirksamkeit verleiht. Die Gebrauchsdauer ist jedoch wegen des erheblichen Verschleißes der Ringvorsprünge noch wenig befriedigend.

Der Erfindung liegt die Aufgabe zugrunde, eine Wellendichtung der eingangs genannten Art derart weiterzuentwickeln, daß sich eine verbesserte Gebrauchsdauer ergibt.

Diese Aufgabe wird erfindungsgemäß bei einer Wellendichtung der eingangs genannten Art dadurch gelöst, daß das Dichtelement aus Gummi einer Härte Shore A von 65 bis 90 besteht und daß der Ringvorsprung durch die flächenhafte Anpressung des Dichtelementes an die Welle in die Dichtfläche versenkbar ist.

Der Ringvorsprung des Dichtelementes der erfindungsgemäßen Wellendichtung ist von extremer Feinheit und weist im allgemeinen nur eine Höhe von 0,04 bis 0,8 mm auf, zweckmäßig eine solche von 0,05 bis 0,09 mm bei vergleichbar geringer Länge in axialer Richtung.

Für das Versenken in dem weichelastischen Gummikörper des Dichtelementes genügen dadurch die normalen Andrückkräfte und bewirken zugleich eine gegenseitige Berührung zwischen der Dichtfläche und der Oberfläche der abzudichtenden Welle in geringem axialen Abstand von dem Ringvorsprung. Die so erhaltenen, die Welle beiderseits des Ringvorsprunges konzentrisch umschließenden Hohlräume füllen sich unter normalen Betriebsbedingungen mit abzudichtendem Medium, wodurch eine gute Schmierung der dynamischen Abdichtungszone gewährleistet ist. Hinsichtlich des in dieser kritischen Zone auftretenden Verschleißes ergibt sich eine deutiche Verbesserung. Auch bei der Abdichtung von Schmieröl wurde die Ablagerung von Ölkohle im Bereich der so gebildeten, die Welle konzentrisch umschließenden Schmierstofftaschen nicht beobachtet.

Das Dichtelement besteht bevorzugt aus Gummi einer Härte Shore A von 70 bis 80, und zeichnet sich insbesondere in diesem Falle durch eine große Gebrauchsdauer aus.

Das Dichtelement kann durch ein Federlement an die Welle angepreßt sein, beispielsweise durch eine Ringwendelfeder, und in diesem Falle empfiehlt sich eine der Ausführung nach der DE-A 1 007 130 ähnliche Gestaltung, bei der anstelle der dort vorgesehenen die Welle schaftkantig berührenden Dichtlippe eine Dichtfläche mit den kennzeichnenden Merkmalen des Patentanspruches 1 vorgesehen ist. Auch ist es möglich, die Dichtfläche in axialer Richtung durch Kegelflächen zu begrenzen.

Der Kegelwinkel auf der dem abgedichteten Raum zugewandten Seite sollte in diesem Falle größer bemessen sein als der gegenüberliegende Kegelwinkel und kann etwa 90 - 120° betragen.

Die Anwendung der Erfindung bei anders gestalteten Dichtelementen ist ebenfalls möglich und führt zu besonders guten Ergebnissen bei Ausführungen, bei denen die Dichtfläche ein Profil aufweist, das axial in sich gewölbt ist und das die Welle nur im Bereich des dem abgedichteten Raum zugewandten Endes berührt. Die Wölbung kann derjenigen des Dichtelementes nach der US-A 2 804 325 ähnlich sein.

Der Ringvorsprung wird zweckmäßig durch eine Dichtlippe gebildet, beispielsweise eine Dichtlippe, die durch die Schnittlinie zweier einander durchschneidender Kegelflächen gebildet wird. Die dem abzudichtenden Medium zugewandte Kegelfläche ist bei einer entsprechenden Ausbildung mit einem größeren Kegelwinkel versehen als die gegenüberliegende Fläche. Zweckmäßige Werte liegen im Bereich zwischen 120 und 130°.

Im Bereich der Dichtfläche können mehrere, einen gegenseitigen axialen Abstand aufweisende Ringvorsprünge vorgesehen sein.

Der gegenseitige Abstand ist in diesen Fällen so mit der Dimension der einzelnen Ringvorsprünge und der Härte des für die Herstellung des Dichtelementes verwendeten Gummis abzustimmen, daß sich unter der betriebsbedingten Anpressung in den Zwischenräumen der einzelnen Ringvorsprünge eine gegenseitige Berührung zwischen der Dichtfläche und der abzudichtenden Welle ergibt.

Nur in diesem Falle wird die Entstehung von Anbackungserscheinungen im Bereich der dynamischen Abdichtungszone sicher vermieden und damit über lange Zeiträume ein zuverlässiges und weitgehend verschleißfreies Abdichtungsergebnis erzielt. Die Drehrichtung der abzudichtenden Welle ist dabei beliebig.

Der Gegenstand der vorliegenden Erfindung wird nachfolgend anhand der als Anlage beigefügten Zeichnung weiter erläutert. Es zeigen:

Figur 1 eine beispielhafte Ausführung der erfindungsgemäßen Wellendichtung in halbgeschnittener Darstellung nach dem Einbau.

Figur 2 einen Ausschnitt eines in der erfindungsgemäßen Wellendichtung zur Anwendung gelangenden Dichtelementes im Bereich der Dichtfläche.

Figur 3 den in Figur 2 gezeigten Bereich des Dichtelementes nach dem Einbau der zugehörigen Welle.

Figur 4 eine andere Ausführung der erfindungsgemäßen Wellendichtung in halbgeschnittener Darstellung.

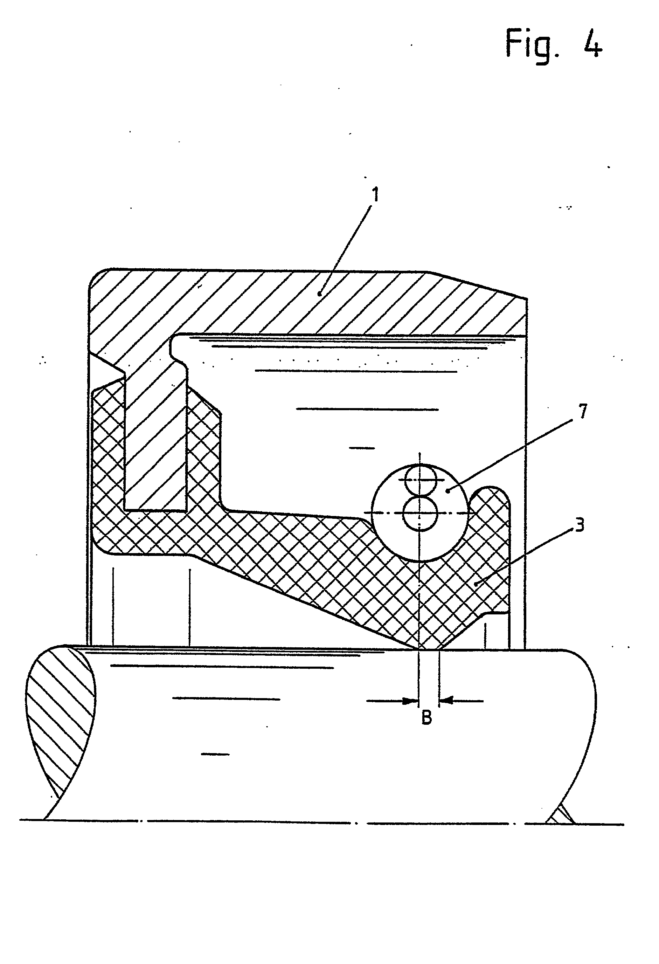

Figuren 5 und 6
zwei voneinander verschiedene Auslegungen der Dichtfläche bei einer an Figur 4 angelehnten Gestaltung.

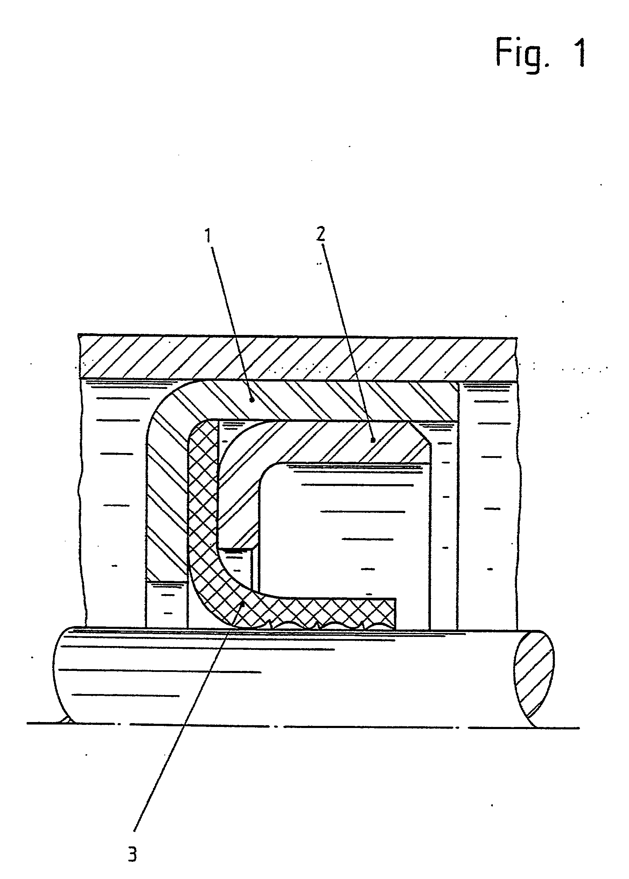

Die in Figur 1 gezeigte Wellendichtung umfaßt den Außenring 1,2 und das flüssigkeitsdicht und verdrehsicher darin festgelegte Dichtelement 3. Letzteres besteht aus Gummi einer Härte Shore A von 75 und ist innenseitig mit einer in Richtung des abgedichteten Raumes vorspringenden Einwölbung versehen.

So ergibt sich eine im wesentlichen zylindrisch ausgebildete Dichtfläche, die an der Oberfläche der abgedichteten Welle anliegt.

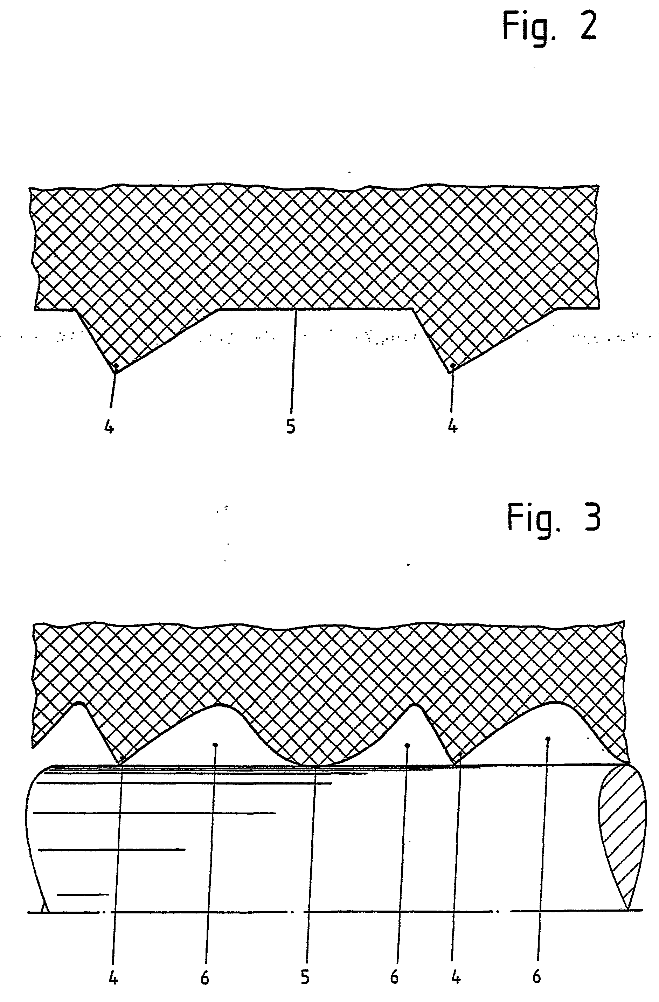

Die Dichtfläche wird durch einen gegenseitigen axialen Abstand aufweisende Ringvorsprünge unterbrochen, die die Welle konzentrisch umschließen und eine Höhe von 0,06 mm haben. Diese Ringvorsprünge werden in axialer Richtung beiderseits durch ein an der Dichtlippe durchschneidende Kegelflächen begrenzt, wobei der Kegelwinkel der der Außenluft zugewandten Kegelfläche 58° beträgt, der Kegelwinkel der dem abgedichteten Medium zugewandten Kegelfläche etwa 122°. Die hieraus resultierende Gesamterstreckung eines jeden Ringvorsprunges in axialer Richtung beträgt 0,14 mm, der gegenseitige Abstand der Dichtlippen benachbarter Ringvorsprünge etwa 0,4 mm. Die herstellungsbedingte Gestalt der Dichtfläche wird durch Figur 2 verdeutlicht, wobei aus Gründen der Anschaulichkeit auf eine maßstäbliche Wiedergabe verzichtet worden ist.

Figur 3 dient der Verdeutlichung der sich bei dem Einbau der zugehörigen Welle ergebenden, elastischen Deformierung der Dichtlippe einer erfindungsgemäßen Wellendichtung. Es ist deutlich zu erkennen, daß die zwischen den Ringvorsprüngen 4 befindliche Dichtfläche 5 unter der Wirkung der betriebsnotwendigen Anpressung des Dichtelementes in einen Berührungskontakt zu der Oberfläche der abzudichtenden Welle gelangt. Auf eine maßstabgetreue Wiedergabe der Verformungen wurde auch in diesem Fall verzichtet. Die axiale Aufeinanderfolge der konzentrischen Ringnuten 6 unterschiedlichen Profils und mikroskopisch kleiner Dimensionierung begünstigt indessen die Gebrauchseigenschaften derart, daß die Wellendichtung 9 anspruchsvoller Verwendung zugeführt werden kann.

Figur 4 nimmt Bezug auf eine Ausführung, die in ihrer äußerlichen Gestalt an diejenige nach der DE-AS 10 07 130 angelehnt ist. Ebenso wie die vorbekannte Ausführung besteht die erfindungsgemäße Ausführung aus einem Dichtelement 3 aus Gummi, welches durch Vulkanisation adhesiv an dem Außenring 1 aus metallischem Werkstoff festgelegt ist. Im Gegensatz zu der vorbekannten Ausführung ist das Dichtelement 3 jedoch nicht mit einer scharfkantig an der Welle anliegenden Dichtlippe versehen, sondern mit einer in der erfindungsgemäßen Weise modifizierten Dichtfläche. Diese wird durch die auf den Außenumfang des Dichtelementes 3 aufgelegte Ringwendelfeder 7 aus metallischem Werkstoff an die Welle angepreßt. Die vor dem Einbau der Wellendichtung aus der Dichtfläche in radialer Richtung nach innen vorspringenden Ringvorsprünge 4 werden dadurch in der Dichtfläche versenkt.

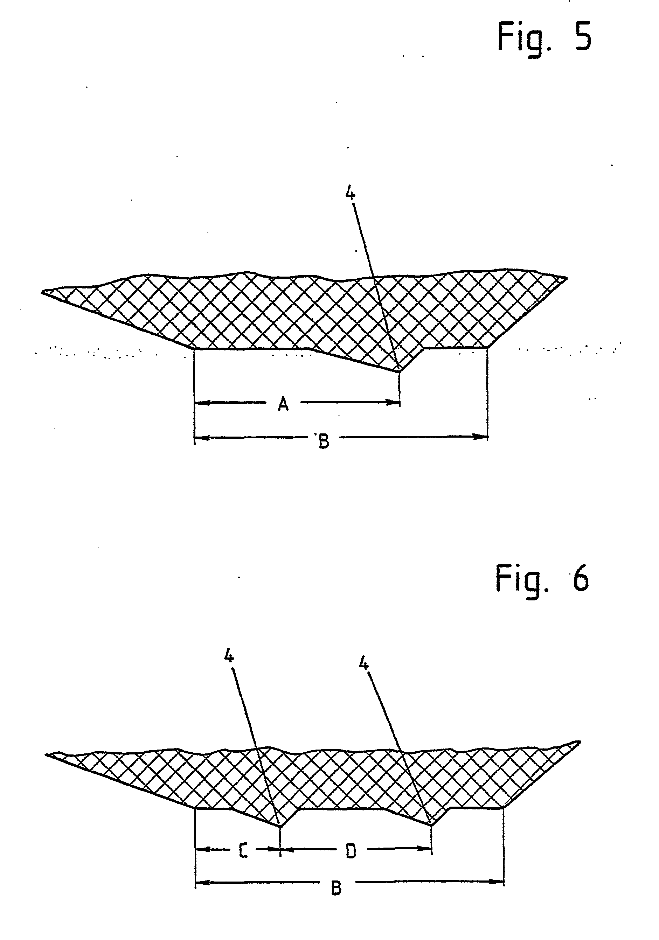

Zwei beispielhafte Gestaltungsmöglichkeiten für die Ausbildung der Dichtfläche werden in Figuren 5 und 6 gezeigt. Im erstgenannten Fall ist im Bereich der Dichtfläche nur ein einziger Ringvorsprung 4 vorhanden, im letztgenannten Falle sind es deren 2, wobei der gegenseitige, axiale Abstand mit D bezeichnet ist.

Die Dichtfläche B wird auf der von dem abgedichteten Raum abgewandten Seite durch die Wirkungslinie der Ringwendelfeder 7 begrenzt, wie anhand der Figur 4 ersichtlich. Sie hat eine Länge in axialer Richtung von 0,2 bis 1,5 mm, vorteilhaft eine solche von 0,25 bis 1,0 mm. Der Wert A (Figur 5) soll etwas zwei Drittel der axialen Erstreckung der Dichtfläche B entsprechen, der Wert C (Figur 6) etwa einem Viertel des genannten Wertes und der Wert D etwa der Hälfte. Der dem abgedichteten Raum zugewandte Kegelwinkel des Ringvorsprunges 4 ist etwa 2,5mal so groß wie der Kegelwinkel des Ringvorsprunges auf der der Außenluft zugewandten Seite.

Er beträgt etwa 100° bei einer radialen Höhe des undeformierten Ringvorsprunges von etwa 0,06 mm. Der das Dichtelement 3 bildende, gummielastische Werkstoff hat eine Härte Shore A von etwa 80.

**Patentansprüche**

1. Wellendichtung, umfassend ein Dichtelement (3) aus polymerem Werkstoff und mit einer Dichtfläche (5), die die Welle unter einer elastischen Anpressung flächenhaft berührt, wobei im Bereich der so gebildeten Berührungszone wenigstens ein die Welle konzentrisch umschließender, einstückig angeformter Ringvorsprung (4) vorgesehen ist, dadurch gekennzeichnet, daß das Dichtelement (3) aus Gummi einer Härte Shore A von 65 bis 90° besteht und der Ringvorsprung (4) durch die flächenhafte Anpressung des Dichtelementes an die Welle in der Dichtfläche (5) versenkbar ist.

2. Wellendichtung nach Anspruch 1, dadurch gekennzeichnet, daß das Dichtelement (9) aus Gummi einer Härte Shore A von 70 bis 80° besteht.

3. Wellendichtung nach Anspruch 1 bis 2, dadurch gekennzeichnet, daß der Ringvorsprung (4) durch eine Dichtlippe gebildet wird.

4. Wellendichtung nach Anspruch 3, dadurch gekennzeichnet, daß die Dichtlippe mit einer Dichtkante versehen ist, die durch die Schnittlinie zweier einander durchschneidender Kegelflächen gebildet wird.

5. Wellendichtung nach Anspruch 1 bis 4, dadurch gekennzeichnet, daß mehrere, einen gegenseitigen axialen Abstand aufweisende Ringvorsprünge (4) vorhanden sind.

**Claims**

1. A shaft seal comprising a sealing element (3) of polymeric material and having a sealing surface (5) which under a resilient contact pressure makes flat contact with the shaft, at least one annular projection (4), moulded on in one-piece and surrounding the shaft concentrically, being provided in the region of the contact zone thus formed, characterised in that the sealing element (3) is composed of rubber with a Shore A hardness of 65 to 90° and the annular projection (4) is depressable into the sealing surface (5) by means of the flat contact pressure of the sealing element on the shaft.

2. A shaft seal according to claim 1, characterised in that the sealing element (9) is composed of rubber with a Shore A hardness of 70 to 80°.

3. A shaft seal according to claim 1 or 2, characterised in that the annular projection (4) is formed by a sealing lip.

4. A shaft seal according to claim 3, characterised in that the sealing lip is provided with a sealing edge, which is formed by the intersection of 2 conical surfaces crossing each other.

5. A shaft seal according to any of claims 1 to 4, characterised in that a plurality of annular projections (4), having a mutual axial distance, is provided.

**Revendications**

1. Joint pour arbre comprenant un élément d'étanchéité (3) en matériau polymère et venant en contact avec l'arbre avec compression élastique sur une surface d'étanchéité (5), tandis qu'il existe dans la zone de contact ainsi formée au moins une saillie annulaire (4) réalisée d'une pièce et entourant concentriquement l'arbre, caractérisé en ce que l'élément d'étanchéité (3) est constitué de caoutchouc ayant une dureté Shore A de 65 à 90 et en ce que la saillie annulaire (4) peut être enfoncée dans la surface d'étanchéité (5) par la compression de l'élément d'étanchéité contre l'arbre.

2. Joint pour arbre selon la revendication 1, caractérisé en ce que l'élément d'étanchéité (9) est constitué de caoutchouc ayant une dureté Shore A de 70 à 80.

3. Joint pour arbre selon les revendications 1 et 2, caractérisé en ce que la saillie annulaire (4) est constituée par une lèvre d'étanchéité.

4. Joint pour arbre selon la revendication 3, caractérisé en ce que la lèvre d'étanchéité est pourvue d'un bord d'étanchéité qui est formé par l'intersection de deux surfaces coniques sécantes.

5. Joint pour arbre selon les revendications 1 à 4, caractérisé en ce qu'il existe plusieurs saillies annulaires (4) présentant une distance axiale mutuelle.

Fig. 1

1   2

3

Fig. 2

4    5    4

Fig. 3

4    6    5    6    4    6

Fig. 4

Fig. 5

Fig. 6